**Europäisches Patentamt**

**European Patent Office**

**Office européen des brevets**

(19)

(11) Veröffentlichungsnummer: **0 444 488 B1**

## EUROPÄISCHE PATENTSCHRIFT

(12)

(45) Veröffentlichungstag der Patentschrift: **19.04.95**

(51) Int. Cl.⁶: **C08L 95/00**, //(C08L95/00, 33:06)

(21) Anmeldenummer: **91102210.1**

(22) Anmeldetag: **16.02.91**

(54) **Metallverbindungen-haltige polymermodifizierte Bitumen.**

(30) Priorität: **02.03.90 DE 4006499**

(43) Veröffentlichungstag der Anmeldung:
**04.09.91 Patentblatt  91/36**

(45) Bekanntmachung des Hinweises auf die
Patenterteilung:
**19.04.95 Patentblatt  95/16**

(84) Benannte Vertragsstaaten:
**AT BE CH DE DK ES FR GB IT LI NL SE**

(56) Entgegenhaltungen:
**DE-A- 2 161 009**
**DE-A- 2 509 473**

(73) Patentinhaber: **Röhm GmbH**
**Kirschenallee**
**D-64293 Darmstadt (DE)**

(72) Erfinder: **Müller, Michael, Dr.**
**Pater-Delp-Strasse 32**
**W-6140 Bensheim 3 (DE)**
Erfinder: **Hitzler, Otto**
**Wilhelm-Leuschner-Strasse 57**
**W-6106 Erzhausen (DE)**

**Beschreibung**

Gebiet der Erfindung

Die Erfindung betrifft Säuregruppen-haltige Polymere auf Polyalkyl(meth)acrylat-Basis als Bitumenverbesserungsmittel und mit solchen Polymeren modifizierte Bitumina mit verbesserten technischen Eigenschaften.

Stand der Technik

Bitumen, das ein Gemisch von im wesentlichen verschiedenen Kohlenwasserstoffen, mit schwankenden Anteilen an paraffinischen, naphthenischen und aromatischen Kohlenwasserstoffen ist, wird aufgrund seiner Eigenschaften vielfältig verwendet, so für die Herstellung von Straßenbelägen, als Vergußmassen, als Anstriche, im Bautenschutz oder in Form von Dachpappen sowie als Abdichtungsmittel gegen Grundwasser. Infolge der spezifischen Produkteigenschaften - Bitumina besitzen in Abhängigkeit von der Rohölprovenienz nur geringe bis gar keine elastischen Eigenschaften - verspröden damit hergestellte Beläge bei niedrigen Temperaturen und erweichen bei höheren Temperaturen.

Durch Zusatz verschiedener Additive, insbesondere von Polymeren, wird versucht, eine Vergütung der Bitumina, insbesondere eine Verbesserung der rheologischen Eigenschaften zu erreichen, die z.B. dem Asphalt, einem Bitumen-Mineralstoff-Gemisch, der besonders für den Straßenbau verwendet wird, eine ausreichende Stabilität und Kälteflexibilität sowie eine hohe Dauerfestigkeit bei ständig steigenden Verkehrsbelastungen geben sollen. So kann der Polymerzusatz die sogenannte Plastizitätsspanne, d.i. die Differenz zwischen Erweichungspunkt und Brechpunkt, vergrößern. Eine Absenkung des Brechpunktes (DIN 52 012) und eine Erhöhung der Duktilität (DIN 52 013) durch Polymerzusatz zeigen bessere Kälteflexibilität an. Der Zweck der Polymeren als Bitumenadditive ist die Veränderung des elastoviskosen Verhaltens von Bitumen, das heißt die Erweiterung seiner Plastizitätsspanne und Verbesserung der elastischen Rückstellung.

Neben Natur- und Synthesekautschuken wurden als Polymere, Duroplastharze und Thermoplaste als Bitumenverbesserer geprüft (Körner et al. Plaste und Kautschuk 24 (1977), 475 bis 478). Als Polymer-Bitumenzusätze werden derzeit vor allem Styrol/Butadien (SB)-, EPDM- und Ethylen/Vinylacetat (EVA)-Copolymere und insbesondere für Industriebitumen, auch ataktisches Polypropylen technisch verwendet. Marktgängige polymermodifizierte Bitumina sind u.a. ® Caribit (SB, Shell), ® Olexobit (EPDM, BP), ® Styrelf (SB, Elf).

Auch Polymere auf Acrylsäureester- und Methacrylsäureester-Basis, insbesondere Polymere von Alkylmethacrylsäureestern (PAMA) sind als Bitumenverbesserungsmittel beschrieben. Eine breitere technische Verwendung haben diese Polymeren, trotz guter Erfüllung einer Reihe gestellter Anforderungen als Zusätze, vor allem wegen unzureichender Verbesserung der elastischen Rückstellung gebrauchsfertiger elastomermodifizierter Bitumina, bisher nicht gefunden.

So beschreibt die US-Patentschrift 2 420 082 bituminöse Mischungen aus Bitumen und 2 bis 5 % Poly-$C_8$-$C_{10}$-alkylmethacrylaten, ohne spezifische Angaben zu deren Molekulargewichten, wodurch die Duktilität des Bitumen verbessert wird.

Die US-Patentschrift 2 848 429 offenbart durch Zusatz von je 0,01 bis 0,5 % Kautschuk und Poly-$C_8$-$C_{24}$-alkyl(meth)acrylaten erhaltene bituminöse Mischungen mit verbesserter Duktilität. Die PAMA's haben Molekulargewichte von 5 000 bis 500 000.

Die deutschen Patentschriften DE-AS 12 40 773 und DE-OS 23 31 727 beschreiben ebenso mit Polymeren von Alkylmethacrylaten, ohne nähere und spezifische Angaben über diese Polymeren zu machen, verbesserte bituminöse Bindemittel für Straßendecken.

Weiter werden Polyalkyl(meth)acrylate bzw. Copolymerisate von Alkyl(meth)acrylaten als Bitumenverbesserungsmittel vorgeschlagen, in der DE-OS 25 09 473 ein bei Normaltemperatur festes, nicht klebriges Mischpolymerisat mit Molekulargewichten von 50 000 bis 500 000, das im wesentlichen aus Alkyl(meth)-acrylaten mit Alkylgruppen, die mehr als 6 C-Atome enthalten, sowie aus 3 bis 20 Gew.-% Acrylsäure oder Methacrylsäure und aus 3 bis 20 Gew.-% basischen Stickstoff-haltigen Monomeren aufgebaut ist, und dazu in der DE-OS 39 17 816 und der DE-OS 39 25 827 solche, die vorteilhaft unter 2,8 Gew.-% einpolymerisierter Carbonsäuren und unter 2,8 Gew.-% einpolymerisierter basischer Stickstoffverbindungen enthalten. Aus der japanischen Patent-Offenlegungsschrift 52-141 829 sind stufenweise emulsionspolymerisierte Zusätze und aus der WO 88/07 067 Poly-$C_4$-$C_{20}$-Alkylmethacrylate mit Molekulargewichten von etwa 5 000 bis etwa 1 000 000 bekannt und die in Mengen von 0,01 bis etwa 10 Gew.-% in dem modifizierten Bitumen enthalten sind.

Olefinische Copolymere, vor allem mit Acrylsäure bzw. Methacrylsäure als reaktionsfähigen Comonomeren aufgebaut, sind als Zusätze von bituminösen Stoffen in der deutschen Auslegeschrift 11 88 807 und in WO 87/04 174 beschrieben. Nach der deutschen Auslegeschrift wird ein so Carboxylgruppen-haltiges, kautschukartiges Butadien-Acrylnitril Copolymer bei der Vermischung mit dem bituminösen Stoff durch Zusatz eines Oxids eines zweiwertigen Metalls, vorzugsweise Zinkoxid, vernetzt. Nach der WO-Patentanmeldung können außer α-Olefin-Homopolymeren und α-Olefin-α,ß-ungesättigte Carbonsäure-Copolymeren auch Ionomere des zuletzt genannten Copolymertyps als Bitumenzusätze verwendet werden. Diese Ionomeren haben aber sehr geringe Meltflowindices und sind wegen ihres vernetzten Zustandes nicht homogen in das bituminöse Material einarbeitbar.

Voraussetzungen an die polymeren Additive für die Nutzung der Eigenschaftsverbesserungen in bituminösen Gemischen sind Oxidations- und Thermostabilität der Polymeren, ihre leichte Einarbeitbarkeit im Bitumen, die Kompatibilität mit unterschiedlichen Bitumensorten und die Stabilität der Bitumen-Polymer-Mischung.

Die bekannten polymeren Bitumenadditive erweitern im ausreichendem Maße die Plastizitätsspanne in bituminösen Gemischen und in damit hergestellten Mineralabmischungen, d.h. Erweichungspunkt und Brechpunkt solcher Materialien werden vielfach durch die bekannten Polymerzusätze günstig beeinflußt.

Hohe Dauerfestigkeit und Elastizität der mit bituminösen Bindemitteln hergestellten Asphalte, welche durch die elastischen Eigenschaften der Bitumina bestimmt werden, sind, wie beispielsweise in der Praxis zum Teil stark verformte Asphalt-Straßendecken zeigen, in noch nicht genügenden bzw. guten Maßen vorhanden.

Aufgabe und Lösung

Es stellte sich daher die Aufgabe, in bituminösen Materialien die Erweichungspunkte zu erhöhen und ihre elastischen Eigenschaften, gemessen z.B. als elastische Rückstellung, deutlich zu verbessern, wobei sie weiter die bekannten und erforderlichen Eigenschaften wie hohe Thermostabilität und Oxidationsbeständigkeit sowie gute Kälteflexibilität besitzen.

Es wurde gefunden, daß reaktive Polyalkyl(meth)acrylate bestimmter Zusammensetzungen wirksame, gut einarbeitbare und Kompatibilität aufweisende Bitumenzusätze sind, mit denen sowohl die elastischen Eigenschaften des Bitumens und damit bituminöser Zusammensetzungen wesentlich verbessert werden können.

Überraschenderweise ergab sich, daß in polymermodifiziertem Bitumen, durch Polyalkyl(meth)acrylate langkettiger Alkylester, die durch Copolymerisation mit polymerisierbaren sauren Verbindungen erhalten werden, und weiter durch Zugabe von Metallsalzen zu diesen Mischungen, extrem hohe elastische Rückstellungen erreicht werden und die bituminösen Mischungen auch erhöhte Erweichungspunkte aufweisen.

Die Erfindung betrifft daher:

Polymermodifiziertes Bitumen mit verbesserter elastischer Rückstellung durch einen Gehalt von 0,5 bis 20 Gew.-% an Polymerbestandteilen, wobei diese Polymerbestandteile mindestens zu 20 Gew.-% Polyalkyl-(meth)acrylate sind,

dadurch gekennzeichnet,

daß das Polyalkyl(meth)acrylat in Anteilen von 50 bis 99,8 Gew.-% aus $C_6$- bis $C_{28}$-Alkyl(meth)acrylaten, in Anteilen von 0,2 bis 20 Gew.-% aus polymerisierbaren Carbonsäuren und/oder Sulfonsäuren und in Anteilen von 0 bis 49,8 Gew.-% aus einer oder mehreren anderen polymerisierbaren, insbesondere Stickstoffenthaltenden, Verbindungen mit nicht mehr als einer polymerisierbaren Doppelbindung aufgebaut und dieses in dem Bitumen gleichmäßig verteilt ist, und dieser Mischung dann reaktive Metallverbindungen zugegeben werden.

Reaktive Metallverbindungen sind vor allem basische Salze organischer und/oder anorganischer Säuren von Metallen und/oder die entsprechenden Metalloxide, -hydroxide und -carbonate sowie Metallalkoholate.

Das erfindungsgemäß zu verwendende Polyalkyl(meth)acrylat der angegebenen Zusammensetzung kann ein Copolymerisat der angegebenen Comonomeren oder ein Gemisch von Copolymerisaten aus Alkyl-(meth)acrylaten mit polymerisierbaren Carbonsäuren und/oder polymerisierbaren Sulfonsäuren sein.

Die Alkyl(meth)acrylatcopolymerisate und/oder Gemische von Copolymerisaten mit erfindungsgemäßen Zusammensetzungen können sowohl als Lösung, z.B. in einem geeigneten Mineralöl, als wäßrige Emulsion oder in reiner Form dem Bitumen oder bituminösen Gemischen zugesetzt werden. Die reaktiven Metallverbindungen können als solche oder in Form von Lösungen eingearbeitet werden.

Zwar läßt sich wie aus dem Stand der Technik bekannt, durch Zusatz von Polyalkyl(meth)acrylaten, welche Molekulargewichte im Bereich von etwa 50 000 bis etwa 1 000 000 haben, in polymermodifizierten Bitumina die Kälteflexibilität, was in den Kenndaten von Brechpunkt und Duktilität zum Ausdruck gebracht wird, verbessern, in nicht ausreichendem Maße jedoch die elastische Rückstellung, wodurch in verarbeiteten Bitumenmassen bleibende Verformungen, z.B. in Abdichtringen oder in Straßenbelägen hingenommen werden müssen, die ihrerseits hohe, beispielsweise verkehrssicherheitstechnische, Risiken in sich bergen.

Die deutsche Spezifikation der technischen Lieferbedingungen für gebrauchsfertige polymermodifizierte Bitumen, TI PmB 88, Teil 1, Fassung vom 30.12.1988, stellt an die verschiedenen PmB-Sorten Anforderungen an die elastische Rückstellung von mindetens 50 %.

Zum Nachweis der elastischen Eigenschaften gebrauchsfertiger elastomermodifizierter Bitumen wird die Prüfung der elastischen Rückstellung nach dem Halbfadenverfahren im Duktilometer wie folgt in Anlehnung an DIN 52 015 bei 25 Grad C durchgeführt:

Abweichend von DIN 52 013 werden die Probekörper nur bis zu einer Fadenlänge von 20 cm ausgezogen und der Faden nach Arretierung des Vorschubs innerhalb 10 s mit einer Schere in Fadenmitte in zwei Halbfäden getrennt. Die elastische Rückstellung ist definiert als der Abstand, der sich nach 30 min zwischen den beiden Halbfädenenden einstellt. Sie wird angegeben in %, bezogen auf die Ausgangsdehnung.

Die Beispiele mit Vergleichswerten nach dem Stand der Technik belegen die hohen elastischen Rückstellungen, insbesondere in Werten von 56 bis 90% (DIN 52013), und Verbesserungen der Thermostabilitäten in den erfindungsgemäßen PmB's (Zusammenstellung s. Tabelle in Teil B der experimentellen Ausführungen).

Der Aufbau der erfindungsgemäßen Copolymerszusätze mit (Meth)acrylsäureestern gewährt gute Kälteflexibilität, gute Oxidationsbeständigkeit und gute Löslichkeit, d.h. auch leichte Einarbeitbarkeit in fast allen Bitumensorten.

Durchführung der Erfindung

Für die Herstellung der erfindungsgemäß zu verwendenden (Meth)acrylsäurealkylestercopolymerisate werden langkettige Alkylester der Acrylsäure und/oder vor allem der Methacrylsäure mit $C_6$- bis $C_{28}$-, insbesondere mit $C_8$-bis $C_{20}$-Alkylresten, vorteilhaft mit $C_{10}$- bis $C_{18}$-Alkylresten in der Estergruppe als Monomere verwendet.

Beispiele für solche Ester sind n-Hexylmethacrylat, n-Octylmethacrylat, 2-Ethylhexylacrylat, 2-Ethylhexylmethacrylat, n-Decylmethacrylat, Isodecylacrylat, Isodecylmethacrylat, Dodecylmethacrylat, Octadecylacrylat, Octadecylmethacrylat, Eicosylmethacrylat, Tricosylmethacrylat, wobei die für die Esterherstellung verwendeten langkettigen Alkohole bevorzugt als synthetische Alkohole eingesetzt werden, und welche meist Gemische verschiedener Alkohole, insbesondere im $C_8$- bis $C_{26}$-Bereich darstellen. Solche Alkohole sind im Handel beispielsweise unter den Markennamen ® Lorol, ® Alfol, ® Dobanol, ® Behenyl-SR bekannt. Ein beispielsweise für die Herstellung von Isodecylmethacrylat brauchbarer technischer Alkohol ist ein Gemisch aus isomeren Isodecylalkoholen mit einer mittleren C-Zahl (C) = 9,9 - 10,3.

Die Bitumen-modifizierenden Polyalkyl(meth)acrylate sind aus 50 bis 99,8 Gew.-%, vor allem aus 60 bis 99,5 Gew.-% und insbesondere aus 80 bis 99 Gew.-% der langkettigen $C_6$-bis $C_{28}$-Alkylester der Acrylsäure und/oder vor allem der Methacrylsäure aufgebaut, wobei diese vorteilhaft Gemische verschiedener $C_6$- bis $C_{28}$-Alkylester sind.

Die sauren Comonomeren, Carbonsäuren bzw. Sulfonsäuren, sind in Mengen von 0,2 bis 20 Gew.-%, vor allem von 0,2 bis 15 Gew.-%, insbesondere von 0,5 bis 10 Gew.-% und besonders bevorzugt 0,75 bis 5 Gew.-% dieser funktionellen Monomerart, in dem Copolymerisat bzw. den zu mischenden Copolymerisaten eingebaut. Als Carbonsäure-Monomere sind Acrylsäure und Methacrylsäure bevorzugt. Aber beispielsweise auch Maleinsäure oder deren Anhydrid, sowie Crotonsäure oder Itakonsäuren können als saure Comonomere ausschließlich oder mit Acrylsäure und/oder Methacrylsäure zusammen eingebaut sein. Monomere mit Sulfonsäurefunktionen sind beispielsweise 2-Sulfonsäureäthylmethacrylat, 2-Sulfonsäureäthylmethacrylamid, 2-Acrylamido-2-methyl-propansulfonsäure, 2-Acrylamido-dodecansulfonsäure, Styrolsulfonsäure.

In Anteilen von 0 bis 49,8 Gew.-%, besonders in Anteilen von 0 bis 30 Gew.-% können die Copolymerisate aus einer oder mehreren anderen copolymerisierbaren Verbindungen mit einer Doppelbindung aufgebaut sein. Als nicht essentiell notwendige aber brauchbare Monomere für die Herstellung des erfindungsgemäß einzusetzenden Copolymeren seien beispielhaft genannt Acrylsäure- und/oder Methacrylsäureester von $C_1$- bis $C_5$-Alkoholen, wie Methylmethacrylat, Isobutylmethacrylat, n-Butylacrylat, Isoamylmethacrylat, n-Pentylacrylat, aber auch Cyclopentylmethacrylat, Cyclohexylmethacrylat oder -acrylat, 2-Hydroxipropylmethacrylat, 2-Hydroxiethylacrylat, Tetrahydrofurfurylmethacrylat, mehrfach alkoxilierte Methacrylsäureester, weiter Acrylnitril, Acrylamid, Methacrylamid, Styrol, Vinylacetat und vor allem Stickstoffenthaltende, basische polymerisierbare Verbindungen, die bevorzugt in Mengen von 0 bis 20 Gew %, insbesondere in Mengen von 0 bis 10 Gew.-% in dem Polyalkyl(meth)acrylat-Zusatz einpolymerisiert sind.

Als basische monomere Verbindungen sind solche mit sekundären oder tertiären Amino- oder Amidogruppen oder mit basischen heterocyklischen Gruppen zu nennen. Ungesättigte Verbindungen mit primären Aminogruppen verhindern im allgemeinen die radikalische Polymerisation und sind dann ungeeignet. Dagegen sind ungesättigte Verbindungen mit sekundären Aminogruppen, z.B. tert.-Butyl-Aminoalkylester der Acryl- oder Methacrylsäure, polymerisierbar wenn das Wasserstoffatom der Aminogruppe sterisch abgeschirmt ist. Bevorzugte Monomere mit einem basischen Stickstoffatom sind die Dialkylaminoalkylester oder die Dialkylaminoalkylamide der Acryl- oder Methacrylsäure, insbesondere solche mit insgesamt 7 bis 16 Kohlenstoffatomen, und entsprechende N-Alkylacrylamide oder -methacrylamide. Als Beispiele seien Dimethylaminoethylacrylat oder -methacrylat, Dimethylaminopropylacrylat oder -methacrylat, Dimethylaminobutylacrylat oder -methacrylat, N-Methylacrylamid, N-Methylmethacrylamid, Dimethylaminoethylacrylamid oder -methacrylamid und solche Ester oder Amide genannt, die anstelle einer Dimethylaminogruppe eine Diethylamino-, Dipropylamino-, Dibutylamino-, Methylethylamino-, Methylbutylamino-, Morpholino- oder Piperidinogruppe enthalten. Zu geeigneten Stickstoff-haltigen Monomeren gehören weiterhin Vinylpyrrolidon, Vinylpyridin, Vinylimidazol, Vinylimidazolin, Vinylpyrazolon, Vinylpiperidin, sowie die Acryl- oder Methacrylsäureester von Imidazolyl-Alkanolen oder Imidazolinyl-Alkanolen.

Zur Einarbeitung der die elastische Rückstellung verbessernden Polymerkomponente in die Bitumina, lassen sich die reaktiven Polyalkyl(meth)acrylate in Lösung, vor allem solche in einem geeigneten Mineralöl, z.B. einem höher viskosen naphthenbasischen Schmieröl, in wäßriger Emulsion oder in reiner Form dem Bitumen zusetzen. Die Herstellung der Polyalkyl(meth)acrylate kann daher nach den üblichen Verfahren durch vornehmlich radikalische Polymerisation der Monomeren in Lösung oder in Emulsion, aber auch in Substanz vorgenommen werden (vgl. H. Rauch-Puntigam, Th. Völker, Acryl- und Methacrylverbindungen, Springer-Verlag, Berlin, 1967, insbesondere Seiten 203, 207, 230 - 233, 238, 327). Die Molekulargewichtseinstellung, die für die erfindungsgemäß zu verwendenden Polyalkyl(meth)acrylate über $10^4$, insbesondere > 3 mal $10^4$ sein soll, wird vor allem durch die Menge des die Polymerisation auslösenden Initiators im Verhältnis zu den polymerisierbaren Monomeren oder der Mitverwendung eines Reglers, z.B. eines Alkylmercaptans bestimmt und wird nach bekannten Methoden durchgeführt. Die Molekulargewichte Mw in g/mol der erhaltenen Polymerisate sind nach der Methode der Lichtstreuung (Ullmanns Encyklopädie der techn. Chemie, 4. Auflage, Band 15, Seiten 385 bis 387, gemessen worden oder sie sind nach der Eichbeziehung $\eta_{sp/c}$ = 0,0156 x $Mw^{0,645}$ bestimmt, wobei die Viskositäten nach DIN 7745 mit Chloroform als Lösungsmittel bei 20 Grad C gemessen werden.

Den Bitumina werden zur erfindungsgemäßen Modifizierung Polyalkyl(meth)acrylate mit sauren Gruppen im Molekül und mit Molekulargewichten von größer $10^4$ in Mengen von 1 bis 20 Gew.-%, vor allem von 1 bis 10 Gew.-% und insbesondere in Mengen von 2 bis 8 Gew.-% zugesetzt. Neben den erfindungsgemäß notwendigen Polyalkyl(meth)acrylaten können die erfindungsgemäßen polymermodifizierten Bitumina, andere als Veredlungskomponenten für bituminöse Bindemittel und Gemische, bekannte polymere Verbindungen, wie beispielsweise Polyolefine (Polyethylen, Polypropylen), Ethylen-Vinylacetat-Copolymere oder Acrylnitril-Butadien-Styrol-Copolymere, enthalten.

Die reaktiven Metallverbindungen, deren erfindungsgemäßer Zusatz in Bitumenkompositionen Verbesserungen der elastischen Rückstellungen von Werten von etwa 30 - 55 % nach dem Stand der Technik auf Werte bis etwa 56 - 90 % ermöglichen, sind Verbindungen insbesondere von Metallen der 1., 2., 3. und 4. Hauptgruppe und von Metallen der 1., 2., 4., 8., 9. und 10. Nebengruppe des periodischen Systems der Elemente, vor allem basische Salze organischer und/oder anorganischer Säuren der Metalle und/oder die entsprechenden Metalloxide, -hydroxide und -carbonate oder auch Metallalkoholate. Als Metalle sind es vor allem die Elemente der Alkalien, wie beispielsweise Li, Na oder K, die Elemente der Erdalkalien, insbesondere Mg oder Ca, von der 3. Gruppe vor allem Al, von der 4. Gruppe beispielsweise Sn und Pb, von den Nebengruppen vor allem die Metalle Cu, Zn, Ti, Zr, Cr, Fe.

Einzelne reaktive Metallverbindungen sind beispielsweise NaOH, KOH, CaO, $Ca(OH)_2$, Al-triisopropylat, NaOH + $AlCl_3$-Kombinationen, $Zn(acetat)_2$, $Zn(OH)NO_3$, BiOCl, $SbO(NO_3)$, Naphthenate von z.B. Cu, Fe, Pb, Co oder Phenolate wie z.B. Ca-sulfidiertes Alkylphenolat in Mineralöl (Oloa 219 ®).

Die Zugabe der reaktiven Metallverbindungen in die weitgehend homogenen Bitumen-Polymer-Mischungen erfolgt im Temperaturbereich von ca. 60 Grad C bis etwa 250 Grad C, insbesondere im Temperaturbereich von 120 bis 180 Grad C und bei Gußasphalten bei Temperaturen > 200 Grad C und im Falle von Bitumenlösungen auch unter 60 Grad C bis 0 Grad C, z.B. 10 bis 30 Grad C, wobei diese unter gutem Mischen in trockener Form oder in Form von wäßrigen oder organischen Lösungen oder in dispergierter Form - z.B. in Mineralöl - eingearbeitet werden. Dabei steigt die Viskosität des so modifizierten Bitumens deutlich an.

Unter Bitumen werden im Sinne der vorliegenden Erfindung alle z.B. im Straßenbau oder im Dachbahnenbau oder als Verguß-, Dichtungs- oder Anstrichmassen gebräuchlichen Bitumina verstanden.

In den anschließenden Beispielen ist die Herstellung von reaktiven PAMA's und die Herstellung erfindungsgemäßer Bitumen-Polymer-Mischungen (PmB's) und ihre ermittelten Eigenschaften, im Vergleich mit solchen entsprechend dem Stand der Technik, beschrieben.

BEISPIELE

**A. Synthese der reaktiven Polyalkyl(meth)acrylate (PAMA's)**

Beispiel 1

Herstellung eines Polymerisats P1

In einem 1 l-4-Halsrundkolben mit Säbelrührer, Rückflußkühler und Innenthermometer wurden 200 g n-Octan, 298,5 g n-Decylmethacrylat und 1,5 g Methacrylsäure (MAS-entsprechend 1,3 Mol %) unter Rühren auf 85 Grad C erwärmt. Nach Erreichen dieser Temperatur wurde mit 0,6 g tert.-Butylperoctoat die Polymerisation gestartet. 4 Stunden nach Reaktionsbeginn wurde durch Zugabe von 0,6 g tert.-Butylperoctoat nachpolymerisiert. Nach Polymerisationsende wurde mit 100 g n-Octan verdünnt. Die Gesamtpolymerisationsdauer betrug 16 Stunden. Man erhielt eine klare, farblose, viskose Lösung mit 50 Gew.-% Polymerisatgehalt.

Durch Verdünnen mit THF und anschließendes Eingießen in Ethanol wurde das Polymere isoliert und 12 Stunden bei 80 Grad C im Vakuumtrockenschrank getrocknet.

(Mw ~ 890 000 g/mol).

Beispiel 2

Herstellung eines Polymerisates P2

In einem 1 l-4-Halsrundkolben mit Säbelrührer, Rückflußkühler und Innenthermometer wurden 60 g naphthenbasisches Mineralöl, 333,2 g Isodecylmethacrylat, 3,4 g Methacrylsäure (entsprechend 1,4 Mol %) und 3,4 g 2-Dimethylaminoethylmethacrylat (DMAEMA) unter Rühren auf 85 Grad C erhitzt. Nach Erreichen der Temperatur wurde mit 0,68 g tert.-Butylperoctoat die Polymerisation gestartet.

1 Stunde nach Reaktionsbeginn wurde mit 280 g eines naphthenbasischen Mineralöls verdünnt. Die Temperatur wurde während der Polymerisation konstant gehalten. 5 Stunden nach Reaktionsbeginn wurde mit 0,68 g tert.-Butylperoctoat nachpolymerisiert. Die Gesamtpolymerisationsdauer betrug 16 Stunden. Es entstand eine klare, rot-braune, viskose Lösung mit 50 Gew.-% Polymerisationsgehalt.

(Mw des Polymeren ~ 740 000 g/mol).

Beispiele 3 - 5

Es wurde verfahren wie in Beispiel 2 beschrieben. Anstelle des Isodecylmethacrylates wurden jedoch andere Alkylmethacrylate eingesetzt.

| Beispiel | Alkylmethacrylat | MAS | DMAEMA | Öl |
|---|---|---|---|---|
| P3 | 334,4 g eines C12-15-Alkylmethacrylates mit mittlerer C-Zahl 13,4 und 23 % Anteil an verzweigtem Ester | 2,8 g (2,58 Mol %) | 2,8 g | 340 g |
| P4 | 334,4 g eines C12-15-Alkylmethacrylates mit mittlerer C-Zahl 13,4 und 40 % Anteil an verzweigtem Ester | 2,8 g (2,58 Mol %) | 2,8 g | 340 g |
| P5 | 333,2 g Hexylmethacrylat | 3,4 g (2 Mol %) | 3,4 g | 340 g |

In allen Fällen entstanden klare, rot-braune, viskose Lösungen.
Die Molekulargewichte Mw der Polymeren lagen bei 610 000 bis 720 000 g/mol.

Beispiel 6

Herstellung eines Polymerisates P6

In einem 1 l-4-Halsrundkolben mit Säbelrührer, Rückflußkühler und Innenthermometer wurden 60 g naphthenbasisches Mineralöl, 323 g Isodecylmethacrylat und 17 g Methacrylsäure (= 12,2 Mol %) unter Rühren auf 85 Grad C aufgeheizt. Nach Erreichen der Temperatur wurde mit 0,68 g tert.-Butylperoctoat die Polymerisation gestartet.

30 Minuten nach Reaktionsbeginn wurde mit 280 g eines naphthenbasischen Mineralöls verdünnt, nach weiteren 3 Stunden wurde erneut mit 170 g Öl verdünnt und die Temperatur auf 130 Grad C erhöht.

5 Stunden nach Reaktionsbeginn wurde durch Zugabe von 0,68 g tert.-Butylperbenzoat die Nachpolymerisation eingeleitet. Die gesamte Polymerisationsdauer betrug 16 Stunden. Es entstand eine klare, rotbraune, viskose Lösung mit 40 Gew.-% Polymerisatgehalt.
(Mw des Polymeren ~ 640 000 g/mol).

Beispiel 7

Herstellung eines Polymerisates P7

In einem 1 l-4-Halsrundkolben mit Säbelrührer, Rückflußkühler und Innenthermometer wurden 60 g naphthenbasisches Mineralöl, 336,6 g Isodecylmethacrylat und 3,4 g Methacrylsäure (= 2,6 Mol %) unter Rühren auf 85 Grad C aufgeheizt. Nach Erreichen der Temperatur wurde mit 0,68 g tert.-Butylperoctoat die Polymerisation gestartet.

1 Stunde nach Reaktionsbeginn wurde mit 280 g des Mineralöls verdünnt. 5 Stunden nach dem Start wurde durch Zugabe von 0,68 g tert.-Butylperoctoat nachpolymerisiert. Die Gesamtpolymerisation betrug 16 Stunden. Während der gesamten Polymerisationsdauer wurde die Temperatur konstant gehalten. Es entstand eine klare, rot-braune, viskose Lösung mit 50 Gew.-% Polymerisatgehalt.
(Mw des Polymeren 670 000 g/mol).

Beispiel 8

Herstellung eines Polymerisates P8

In einem 1 l-4-Halsrundkolben mit Säbelrührer, Rückflußkühler und Innenthermometer wurden 60 g naphthenbasisches Mineralöl, 326,4 g Isodecylmethacrylat, 3,4 g Methacrylsäure (entsprechend 2,6 Mol %) und 10,2 g 2-Dimethylaminoethylmethacrylat unter Rühren auf 85 Grad C erhitzt. Nach Erreichen der Temperatur wurde mit 0,68 g tert.-Butylperoctoat die Polymerisation gestartet.

1 Stunde nach Reaktionsbeginn wurde mit 280 g eines naphthenbasischen Mineralöls verdünnt.

5 Stunden nach Reaktionsbeginn wurde mit 0,68 g tert.-Butylperoctoat nachpolymerisiert. Die Gesamtpolymerisationsdauer betrug 16 Stunden. Während der gesamten Polymerisationsdauer wurde die Temperatur konstant gehalten. Es entstand eine klare, rot-braune, viskose Lösung mit 50 Gew.-% Polymerisatgehalt.
(Mw des Polymeren ~ 780 000 g/mol).

## B. Herstellung und Prüfung polymermodifizierter Bitumina (PmB's)

Allgemeine Vorschrift zur Herstellung polymermodifizierter Bitumina

Ein handelsübliches Normenbitumen wurde in einem Kolben mit Säbelrührer auf 150 Grad C erwärmt. Bei dieser Temperatur wurde die gewünschte Menge des jeweiligen Polymerisats zugegeben und 1 Stunde lang gerührt. Nach dieser Zeit war das Polymerisat jeweils vollständig eingearbeitet, das erhaltene polymermodifizierte Bitumen war homogen und glatt. Anschließend wurde der zweite, erfindungsgemäße Zusatz zugefügt und es wurde eine weitere halbe Stunde gerührt. Im Falle wäßriger Zusätze wurde vor deren Zugabe auf 90 Grad C abgekühlt, der Zusatz beigemischt und anschließend die Temperatur wieder auf 150 Grad C erhöht. Die Viskosität des so modifizierten Bitumens stieg an, unter bestimmten Bedingungen wurden gelähnliche Bitumen-Polymer-Mischungen erhalten.

Folgende erfindungsgemäßen Zusätze kamen als zweite Komponente zur Anwendung:

Z1      10 %ige wäßrige NaOH

Z2    Lösung von 0,984 g NaOH und 0,165 AlCl$_3$ in 8,851 g Wasser

Z3    Oloa 219 ® = eine 62 %ige Lösung eines überbasischen Ca-sulfidierten Alkylphenolats in Mineralöl, ca. 10 Gew.-% Ca$^{2+}$ enthaltend

Z4    Zinkacetat

Z5    Aluminiumtriisopropylat

Z6    naphthenbasisches Mineralöl

Zum Vergleich enthalten die Beispiele auch Daten von Bitumina, denen nur ein Polymeres zugesetzt wurde, nicht jedoch der zweite erfindungsgemäße Zusatz. Hierdurch soll der Fortschritt gegenüber dem letzten Stand der Technik (DE-A-39 25 827) aufgezeigt werden.

Eigenschaften und Meßmethoden

RuK-EP    = Erweichungspunkt Ring und Kugel, DIN 52011

ER    = Elastische Rückstellung, Duktilometer-Methode, modif. DIN 52013

Pene    = Nadelpenetration, DIN 52010

BP    = Brechpunkt nach Fraas, DIN 52012

TBRK    = Thermische Belastung im rotierenden Kolben, DIN 52016,

Duktilität, DIN 52013

Beispiel 1

| Bitumen B80 einer deutschen Raffinerie | | | | | |
|---|---|---|---|---|---|
| B80 | Polymer | Zusatz | RuK-EP (Grad C) | ER (%) | BP (Grad C) |
| | - | - | 49 | 1,3 | -12 |
| 1 000 g | 80 g P7 | - | 51 | 21 | |
| 1 000 g | 80 g P7 | 5,4 g Z3 | 59 | 75 | -17 |
| 1 000 g | 80 g P7 | 14,4 g Z3 | 59 | 73 | -16 |
| 1 000 g | 50 g P1 | 50,0 g Z6 + 18,0 g Z3 | 54 | 50 | |
| 1 350 g | 108 g P2 | - | 52 | 34 | -17 |
| 1 350 g | 108 g P2 | 7,3 g Z3 | 56 | 74 | -17 |

*Beispiel 2*

*Bitumen B200 einer deutschen Raffinerie*

| B200 | Polymer | Zusatz | Pene (0,1 mm) | RuK-EP (Grad C) | ER (%) | BP (Grad C) | Duktilität (cm) | |
|------|---------|--------|------|--------|-----|---------|----------|----------|
| | | | | | | | 13 Grad C | 25 Grad C |
| | – | – | 166 | 42 | 30 | -17 | | > 100 |
| 930 g | 77,6 g P7 | – | | 41 | 59 | -19 | > 100 | |
| 930 g | 77,6 g P7 | 1,67 g Z3 | | 43 | 67 | | > 100 | |
| 930 g | 77,6 g P7 | 5,02 g Z3 | 156 | 45 | 85 | -21 | > 100 | |
| 1000 g | 40 g P1 | 23,6 g Z2 | 142 | 60 | 70 | | | |
| 1000 g | 40 g P1 | 23,2 g Z1 | – | 58 | 72 | | | |

**Beispiel 3**

Bitumen B80 einer deutschen Raffinerie

| B80 | Polymer | Zusatz | Pene (0,1 mm) | RuK-EP (Grad C) | ER (%) | BP (Grad C) | TBRK Ruk-EP (Grad C) | TBRK ER (%) |
|---|---|---|---|---|---|---|---|---|
| 1 860 g | - | - | 90 | 46 | 14 | -14,5 | 48 | 11 |
| 1 860 g | 148,8 g P2 | - | 124 | 45 | 45 | -21 | 51 | 70 |
| 1 860 g | 148,8 g P2 | 6,7 g Z3 | 112 | 49 | 79 | -24 | | |
| 780 g | 62,4 g P7 | 2,81g Z3 | | 51 | 83 | -23 | | |
| 1 100 g | 88,0 g P8 | 5,94 g Z3 | | 50 | 82 | -23 | | |
| 970 g | 77,6 g P4 | 10,48 g Z3 | | 50 | 82 | -22 | | |
| 1 000 g | 80,0 g P3 | 10,8 g Z3 | | 48 | 68 | | | |
| 1 000 g | 80,0 g P5 | 5,4 g Z3 | | 49 | 70 | -24 | | |
| 800 g | 40 g P1 | 40 g Z6 +18,58 g Z1 | | 67,2 | 84 | | | |
| 800 g | 40 g P1 | 40 g Z6 +18,9 g Z2 | | 74,6 | 85 | | 76 | 71 |

Beispiel 4

1 000 g eines Bitumen B200 wurden auf 150 Grad C erwärmt. Dann wurden 50 g des Polieren P1 zugesetzt und gerührt. Nach 1 Stunde war das Polymer vollständig eingearbeitet. Es wurden dann 1,2 g

EP 0 444 488 B1

festes Z4 zugesetzt und weitere 2 Stunden gerührt. Es wurde Essigsäure frei. Es wurde eine gelige Bitumen-Polymer-Mischung erhalten, der Erweichungspunkt stieg von 41 auf 56,5 Grad C an.

Beispiel 5

Wie in Beispiel 4 beschrieben, wurden 100 g der Polymerlösung P6 in 1000 g Bitumen B80 durch einstündiges Rühren bei 150 Grad C eingearbeitet. Zutropfen von 0,9 g Z5 führte sofort zu einem gelähnlichen Bitumen-PolymerGemisch. Der Erweichungspunkt stieg von 46 Grad C auf 62 Grad C an.

Beispiel 6

| Bitumen B65 einer englischen Raffinerie | | | | |
|---|---|---|---|---|
| B65 | Polymer | Zusatz | RuK-EP (Grad C) | ER (%) |
| 1000 g | -<br>80 g P2 | -<br>5,4 g Z3 | 49<br>56 | 9<br>76 |

**Patentansprüche**

1. Polymermodifiziertes Bitumen mit verbesserter elastischer Rückstellung durch einen Gehalt von 0,5 bis 20 Gew.-% an Polymerbestandteilen, wobei diese Polymerbestandteile mindestens zu 20 Gew.-% Polyalkyl(meth)acrylate sind,
   dadurch gekennzeichnet,
   daß das Polyalkyl(meth)acrylat in Anteilen von 50 bis 99,8 Gew.-% aus $C_6$- bis $C_{28}$-Alkyl(meth)-acrylaten, in Anteilen von 0,2 bis 20 Gew.-% aus polymerisierbaren Carbonsäuren und/oder Sulfonsäuren und in Anteilen von 0 bis 49,8 Gew.-% aus einer oder mehreren anderen polymerisierbaren, insbesondere Stickstoffenthaltenden Verbindungen mit nicht mehr als einer polymerisierbaren Doppelbindung aufgebaut ist und dieses in dem Bitumen gleichmäßig verteilt ist, und dieser Mischung dann reaktive Metallverbindungen zugegeben werden.

2. Polymermodifiziertes Bitumen nach Anspruch 1, dadurch gekennzeichnet, daß die reaktiven Metallverbindungen basische Metallverbindungen sind.

3. Polymermodifiziertes Bitumen nach den Ansprüchen 1 und 2, dadurch gekennzeichnet, daß die basischen Metallverbindungen Salze organischer und/oder anorganischer Säuren von Metallen und/oder Metalloxide, -hydroxide, -carbonate oder -alkoholate sind.

4. Polymermodifiziertes Bitumen nach den Ansprüchen 1 bis 3, dadurch gekennzeichnet, daß die reaktiven Metallverbindungen, Verbindungen von Metallen der 1., 2., 3. und 4. Hauptgruppe und von Metallen der 1., 2., 4., 8., 9. und 10. Nebengruppe des Periodensystems der Elemente sind.

5. Polymermodifiziertes Bitumen nach den Ansprüchen 1 bis 4, dadurch gekennzeichnet, daß die säuregruppenhaltigen, reaktiven Polyalkyl(meth)acrylate mit polymerisierbaren Carbonsäuren aufgebaut sind.

6. Polymermodifiziertes Bitumen nach den Ansprüchen 1 bis 4, dadurch gekennzeichnet, daß die säuregruppenhaltigen, reaktiven Polyalkyl(meth)acrylate mit polymerisierbaren Sulfonsäuren aufgebaut sind.

7. Polymermodifiziertes Bitumen nach den Ansprüchen 1 bis 6, dadurch gekennzeichnet, daß die säuregruppenhaltigen, reaktiven Polyalkyl(meth)acrylate mit 0 bis 20 Gew.-% polymerisierbaren Stickstoffverbindungen aufgebaut sind.

8. Polymermodifiziertes Bitumen nach den Ansprüchen 1 bis 7, dadurch gekennzeichnet, daß die säuregruppenhaltigen, reaktiven Polyalkyl(meth)acrylate mit 0 bis 49,8 Gew.-% aus weiteren polymerisierbaren Monomeren aufgebaut sind.

9. Polymermodifiziertes Bitumen nach den Ansprüchen 1 bis 8, dadurch gekennzeichnet, daß diese weiteren Monomeren $C_1$- bis $C_5$-Alkyl(meth)acrylate sind.

10. Polymermodifiziertes Bitumen zusammengesetzt nach den Ansprüchen 1 bis 9, dadurch gekennzeichnet, daß es eine elastische Rückstellung gemessen mit einem Duktilometer gemäß DIN 52013 in Werten von 56 bis 90 % aufweist.

11. Verfahren zur Herstellung von polymermodifizierten Bitumen mit verbesserter elastischer Rückstellung, dadurch gekennzeichnet, daß einem weitgehend homogenen Bitumen-Polyalkyl(meth)acrylat-Gemisch, wobei das Polyalkyl(meth)acrylat in Anteilen von 50 bis 99,8 Gew.-% aus $C_6$- bis $C_{28}$-Alkyl(meth)-acrylaten, in Anteilen von 0,2 bis 20 Gew.-% aus polymerisierbaren Carbonsäuren und/oder Sulfonsäuren und in Anteilen von 0 bis 49,8 Gew.-% aus einer oder mehrerer anderer polymerisierbarer, insbesondere Stickstoff-enthaltender Verbindungen aufgebaut ist, im Temperaturbereich von 0 Grad C bis 250 Grad C reaktive Metallverbindungen zugegeben werden.

**Claims**

1. Polymer-modified bitumen which has an improved elastic recovery because it contains 0.5 to 20 wt.% of polymer components, said polymer components being, in an amount of at least 20 wt.%, polyalkyl-(meth)acrylates,
characterised in that the polyalkyl(meth)acrylate is synthesised, in amounts of 50 to 99.8 wt.%, from $C_{6-28}$-alkyl(meth)acrylates, in amounts of 0.2 to 20 wt.%, from polymerisable carboxylic acids and/or sulphonic acids and, in amounts of 0 to 49.8 wt.%, from one or more other polymerisable, especially nitrogen-containing compounds having not more than one polymerisable double bond, and that said polyalkyl(meth)acrylate is uniformly distributed in the bitumen and that reactive metal compounds are then added to this mixture.

2. Polymer-modified bitumen according to claim 1, characterised in that the reactive metal compounds are basic metal compounds.

3. Polymer-modified bitumen according to claims 1 and 2, characterised in that the basic metal compounds are metal salts of organic and/or inorganic acids, and/or are metal oxides, hydroxides, carbonates or alkoxides.

4. Polymer-modified bitumen according to claims 1 to 3, characterised in that the reactive metal compounds are compounds of metals of the first, second, third and fourth main groups and of metals of the first, second, fourth, eighth, ninth and tenth subgroups of the periodic table of the elements.

5. Polymer-modified bitumen according to claims 1 to 4, characterised in that the acid group-containing, reactive polyalkyl(meth)acrylates are synthesised from polymerisable carboxylic acids.

6. Polymer-modified bitumen according to claims 1 to 4, characterised in that the acid group-containing, reactive polyalkyl(meth)acrylates are synthesised from polymerisable sulphonic acids.

7. Polymer-modified bitumen according to claims 1 to 6, characterised in that the acid group-containing, reactive polyalkyl(meth)acrylates are synthesised, in an amount of 0 to 20 wt.%, from polymerisable nitrogen compounds.

8. Polymer-modified bitumen according to claims 1 to 7, characterised in that the acid group-containing, reactive polyalkyl(meth)acrylates are synthesised, in an amount of 0 to 49.8 wt.%, from further polymerisable monomers.

9. Polymer-modified bitumen according to claims 1 to 8, characterised in that these further monomers are $C_{1-5}$-alkyl(meth)acrylates.

**10.** Polymer-modified bitumen of a composition according to claims 1 to 9, characterised in that it has an elastic recovery value of 56 to 90%, measured by means of a ductilometer according to DIN 52013.

**11.** A method for preparing polymer modified bitumen with an improved elastic recovery, characterised in that the reactive metal compounds are added, within a temperature range of 0°C to 250°C, to a largely homogenous bitumen-polyalkyl(meth)acrylate mixture, the polyalkyl(meth)acrylate being synthesised, in amounts of 50 to 99.8 wt.%, from $C_{6-28}$-alkyl(meth)acrylates, in amounts of 0.2 to 20 wt.%, from polymerisable carboxylic acids and/or sulphonic acids and, in amounts of 0 to 49.8 wt.%, from one or more other polymerisable, especially nitrogen-containing, compounds.

**Revendications**

**1.** Bitume modifié par des polymères, ayant une déformation élastique améliorée par une teneur de 0,5 à 20% en poids de constituants polymères, ces constituants polymères étant, pour au moins 20% en poids, des poly(méth)acrylates d'alkyle,
caractérisé en ce que
le poly(méth)acrylate d'alkyle se compose, dans des proportions de 50 à 99,8% en poids, de (méth)-acrylates d'alkyle en $C_6$-$C_{28}$, dans des proportions de 0,2 à 20% en poids, d'acides carboxyliques et/ou d'acides sulfoniques polymérisables et, dans des proportions de 0 à 49,8% en poids, d'un ou de plusieurs autres composés polymérisables, en particulier azotés, ne renfermant pas plus d'une double liaison polymérisable, ce poly(méth)acrylate étant reparti uniformément dans le bitume, et en ce que des composés métalliques réactifs sont ensuite ajoutés à ce mélange.

**2.** Bitume modifié par des polymères selon la revendication 1, caractérisé en ce que les composés métalliques réactifs sont des composés métalliques basiques.

**3.** Bitume modifié par des polymères selon la revendication 1 ou 2, caractérisé en ce que les composés métalliques basiques sont des sels d'acides organiques et/ou inorganiques et de métaux et/ou des oxydes, des hydroxydes, des carbonates ou des alcoolates métalliques.

**4.** Bitume modifié par des polymères selon l'une quelconque des revendications 1 à 3, caractérisé en ce que les composés métalliques réactifs sont des composés de métaux des groupes IA, IIA, IIIA et IVA et de métaux des groupes IB, IIB, IVB, et des colonnes 8, 9 et 10 de la classification périodique des éléments.

**5.** Bitume modifié par des polymères selon l'une quelconque des revendications 1 à 4, caractérisé en ce que les poly(méth)acrylates d'alkyle réactifs, contenant des groupements acides, sont construits avec des acides carboxyliques polymérisables.

**6.** Bitume modifié par des polymères selon l'une quelconque des revendications 1 à 4, caractérisé en ce que les poly(méth)acrylates d'alkyle réactifs, contenant des groupements acides, sont construits avec des acides sulfoniques polymérisables.

**7.** Bitume modifié par des polymères selon l'une quelconque des revendications 1 à 6, caractérisé en ce que les poly(méth)acrylates d'alkyle réactifs, contenant des groupements acides, sont construits avec 0 à 20% en poids de composés azotés polymérisables.

**8.** Bitume modifié par des polymères selon l'une quelconque des revendications 1 à 7, caractérisé en ce que les poly(méth)acrylates d'alkyle réactifs, contenant des groupements acides, sont construits avec 0 à 49,8% en poids d'autres monomères polymérisables.

**9.** Bitume modifié par des polymères selon l'une quelconque des revendications 1 à 8, caractérisé en ce que ces autres monomères sont des (méth)acrylates d'alkyle en $C_1$ à $C_5$.

**10.** Bitume modifié par des polymères, composé selon l'une quelconque des revendications 1 à 9, caractérisé en ce qu'il présente une déformation élastique, mesurée avec un ductilimètre selon la norme DIN 52 013, de l'ordre de 56 à 90%.

11. Procédé de préparation de bitumes modifiés par des polymères, ayant une déformation élastique améliorée, caractérisé en ce que des composés métalliques réactifs sont ajoutés, dans la gamme de température de 0° à 250°C, à un mélange largement homogène de bitume et de poly(méth)acrylate d'alkyle, le poly(méth)acrylate d'alkyle se composant, dans des proportions de 50 à 99,8% en poids, de (méth)acrylates d'alkyle en $C_6$-$C_{28}$, dans des proportions de 0,2 à 20% en poids, d'acides carboxyliques et/ou d'acides sulfoniques polymérisables et, dans des proportions de 0 à 49,8% en poids, d'un ou de plusieurs autres composés polymérisables, en particulier azotés.